(19) Europäisches Patentamt
European Patent Office
Office européen des brevets

(11) **EP 2 636 261 B1**

(12) **EUROPEAN PATENT SPECIFICATION**

(45) Date of publication and mention
of the grant of the patent:
**08.07.2020   Bulletin 2020/28**

(21) Application number: **12704120.0**

(22) Date of filing: **06.01.2012**

(51) Int Cl.:
**_H04W 56/00_** (2009.01)

(86) International application number:
**PCT/IB2012/050087**

(87) International publication number:
**WO 2012/059903 (10.05.2012 Gazette 2012/19)**

(54) **A WIRELESS ACCESS POINT CLOCK SYNCHRONIZATION SYSTEM**

TAKTSYNCHRONISIERUNGSSYSTEM FÜR EINEN DRAHTLOSEN ZUGANGSPUNKT

SYSTÈME DE SYNCHRONISATION D'HORLOGE À POINT D'ACCÈS SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.11.2011   US 201113296711**

(43) Date of publication of application:
**11.09.2013   Bulletin 2013/37**

(73) Proprietor: **Decawave Ltd.
Dublin 8 (IE)**

(72) Inventors:
• **MCLAUGHLIN, Michael
Dublin 18 (IE)**
• **VERSO, Billy
Maynooth, County Kildare (IE)**

(74) Representative: **Hirsz, Christopher Stanislaw et al
Mathys & Squire LLP
The Shard
32 London Bridge Street
London SE1 9SG (GB)**

(56) References cited:
**EP-A1- 1 396 730     US-A1- 2007 217 379**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention.

The present invention relates generally to wireless access point systems, and, in particular, to clock synchronization in a wireless access point system.

2. Description of the Related Art.

In general, in the descriptions that follow, we will *italicize* the first occurrence of each special term of art which should be familiar to those skilled in the art of *ultra-wideband* ("*UWB*") communication systems. In addition, when we first introduce a term that we believe to be new or that we will use in a context that we believe to be new, we will **bold** the term and provide the definition that we intend to apply to that term. In addition, throughout this description, we will sometimes use the terms *assert* and *negate* when referring to the rendering of a signal, signal flag, status bit, or similar apparatus into its logically true or logically false state, respectively, and the term *toggle* to indicate the logical inversion of a signal from one logical state to the other. Alternatively, we may refer to the mutually exclusive *boolean* states as logic_0 and logic_1. Of course, as is well known, consistent system operation can be obtained by reversing the logic sense of all such signals, such that signals described herein as logically true become logically false and *vice versa.* Furthermore, it is of no relevance in such systems which specific voltage levels are selected to represent each of the logic states.

In general, in an ultra-wideband ("UWB") communication system, a series of special processing steps are performed by a UWB *transmitter* to prepare *payload data* for transmission via a *packet-based* UWB *channel.* Upon reception, a corresponding series of reversing steps are performed by a UWB *receiver* to recover the data payload. Details of both series of processing steps are fully described in *IEEE Standards 802.15.4* ("*802.15.4*") and *802.15.4a* ("*802.15.4a*").

One of us, Michael McLaughlin, has developed certain improvements for use in UWB communication systems, which improvements are fully described in the following pending applications or issued patents:

"A Method and Apparatus for Generating Codewords", US 7,787,544, issued 31 July 2010;

"A Method and Apparatus for Generating Codewords", *Application Serial No.* 11/309,222, filed 13 July 2006, now abandoned;

"A Method and Apparatus for Transmitting and Receiving Convolutionally Coded Data", US 7,636,397, issued 22 December 2009;

"A Method and Apparatus for Transmitting and Receiving Convolutionally Coded Data", *Application Serial No.* 12/590,124, filed 3 November 2009; and

"A Receiver for Use in an Ultra-Wideband Communication System", *Application Serial No.* 12/885,517, filed 19 September 2010, now *PCT Application* PCT/US11/52056, filed 17 September 2011.

In general, a *network* of UWB *access points* (*APs*) may be employed to locate mobile *tags* using the known *time difference of arrival* method. However, the precision of this method is dependent on careful synchronization of the AP *clocks.* Although various techniques for clock synchronization are known, all of which we are aware suffer from one or more disadvantages. For example, it is possible to achieve clock synchronization using *wired* distribution of a master clock signal to each AP; but such an implementation is relatively expensive to install and relatively difficult thereafter to modify the physical configuration of the APs. Accordingly, a method and related apparatus for synchronization of all network clock timebases using only wireless transmissions is desirable.

Document EP1396730 discloses a clock synchronization method in a communication network according to the prior art.

We submit that what is needed is an improved wireless clock synchronization method and apparatus for use in a UWB communication system. In particular, we submit that such a method and apparatus should provide performance generally comparable to the best prior art techniques but without the disadvantages of known implementations of such prior art techniques.

BRIEF SUMMARY OF THE INVENTION

In accordance with a first embodiment of our invention, we provide a clock synchronization method and ultra-wideband (UWB) communication network. In general, the network comprises a plurality of access points, APs, including a first access point, AP[0], having a first timebase, and a second access point, AP[1], having a second timebase; and a central location engine, CLE. According to our invention, the CLE is adapted to store a time of flight, ToF[0:1], between AP[0] and AP[1]. AP[0] is adapted to develop and transmit a clock synchronization packet, CCP, to AP[1] at a selected time of transmission, ToT. AP[1] is adapted to receive the CCP and, in response, to develop and transmit an AP response packet, ARP[1], to AP[0], the ARP[1] having embedded therein a time of arrival, ToA[0:1::1], referenced to the second timebase. AP[0] is further adapted to receive the ARP[1] and, in response, to develop and transmit a clock response packet, CRP1, to the CLE, the CRP[1] having embedded therein the ToA[0:1::1] and the ToT. The CLE is adapted to receive the CRP[1] and, in response, to calculate a skew between the first and second timebases as a function of the ToT, the ToA[1] and the ToF[0:1] and to develop a time of Arrival, ToA[0:1::0], referenced to the first timebase, from the ToA[0:1::1] using a digital phase locked loop, DPLL.

In accordance with a second embodiment of our invention, AP[1] is adapted to receive the CCP and, in response, to develop and transmit the clock response packet, CRP[1], directly to the CLE, the CRP[1] having embedded therein the time of arrival, ToA[0.1::1], referenced to the second timebase, and the ToT.

In accordance with a third embodiment of our invention, AP[0] is adapted to develop the clock synchronization packet, CCP, for transmission at a selected time of transmission, ToT, and to embed the ToT in the transmitted CCP. Further, AP[1] is adapted to receive the CCP at a time of arrival, ToA[0:1::1], referenced to the second timebase, and, in response, to develop a second time of arrival, ToA[0:1::0], referenced to the first timebase as a function of the ToT, the ToA[0:1::1] and the ToF[0:1] using a digital phase locked loop, DPLL.

In accordance with a fourth, fifth and sixth embodiment, we provide a method for use in an ultra-wideband communication according to the respective first, second and third embodiment.

We submit that each of these embodiments of our invention achieve clock synchronization as effectively as any prior art method or apparatus now known to us, but without the associated disadvantages.

BRIEF DESCRIPTION OF THE SEVERAL VIEWS OF THE DRAWINGS

Our invention may be more fully understood by a description of certain preferred embodiments in conjunction with the attached drawings in which:

Fig. 1 illustrates, in topological form, a UWB communication network comprising a plurality of APs;

Fig. 2 illustrates, in time-distance form, the network of Fig. 1;

Fig. 3 illustrates, in parallel flow diagram form, operation of a local portion of the network of Fig. 1;

Fig. 4 illustrates, in parallel flow diagram form, operation of a remote portion of the network of Fig. 1;

Fig. 5 illustrates, in parallel flow diagram form, operation of a second embodiment of the network of Fig. 1;

Fig. 6 illustrates, in time flow diagram form, details of a portion of the flow diagram of Fig. 5;

Fig. 7 illustrates, in logic diagram form, a *digital phase locked loop* (*DPLL*) adapted for use in the network of Fig. 1; and

Fig. 8 illustrates, in logic diagram form, a digital clock normalizer adapted for use in association with the DPLL in Fig. 7.

In the drawings, similar elements will be similarly numbered whenever possible. However, this practice is simply for convenience of reference and to avoid unnecessary proliferation of numbers, and is not intended to imply or suggest that our invention requires identity in either function or structure in the several embodiments.

DETAILED DESCRIPTION OF THE INVENTION

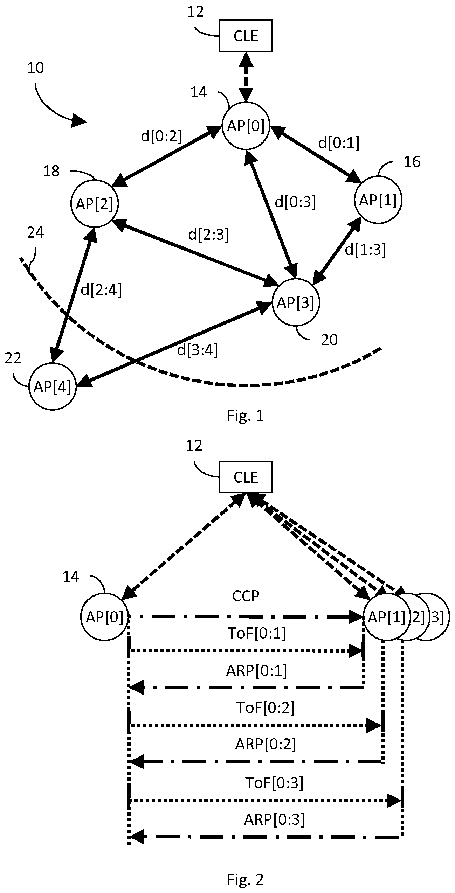

Shown in Fig. 1 is a UWB network 10 comprising a *central location engine* (*CLE*) 12 and a plurality of APs: AP[0] 14; AP[1] 16; AP[2] 18; AP[3] 20; and AP[4] 22; each AP generally comprising a conventional UWB *transmitter, receiver* and associated *control* (all not shown for clarity). In the illustrated topology, the physical distance, d, between each pair of APs is depicted as a bi-directional arrow connecting the AP pair, and labeled with the respective distance, d[*x:y*], where x indicates the first AP of the pair and y indicates the second AP of the pair. By way of illustration, we have shown AP[1-3] as all being within the effective transmission range of AP[0], indicated by dashed arc 24, whereas AP[4] is outside that range and thus must be accessed via either AP[2] or AP[3].

In network 10, a primary responsibility of the CLE 12 is to synchronize the timebases of all APs so as to assure normalized time references with respect to mobile tag-related reports. As is known, the topological distance, d[x:y], between each pair of APs can be used to calculate the theoretical *time of flight* (*ToF[x:y]*) of a radio frequency signal between the APs; alternatively, the actual ToF[x:y] can be determined empirically by measurement in the field. In accordance with one embodiment of our invention, our method and related apparatus facilitates periodic transmission to the CLE of timebase reports from all APs, which then can be normalized by the CLE as a function of the respective pre-calculated and stored times of flight, ToF[x:y]. In accordance with one other embodiment of our invention, each non-anchor AP is specially adapted to synchronize the local timebase to the timebase of the anchor AP[0], such that all network time reference reports transmitted to the CLE 12, including both synchronization-related and normal tag-related reports, are inherently normalized.

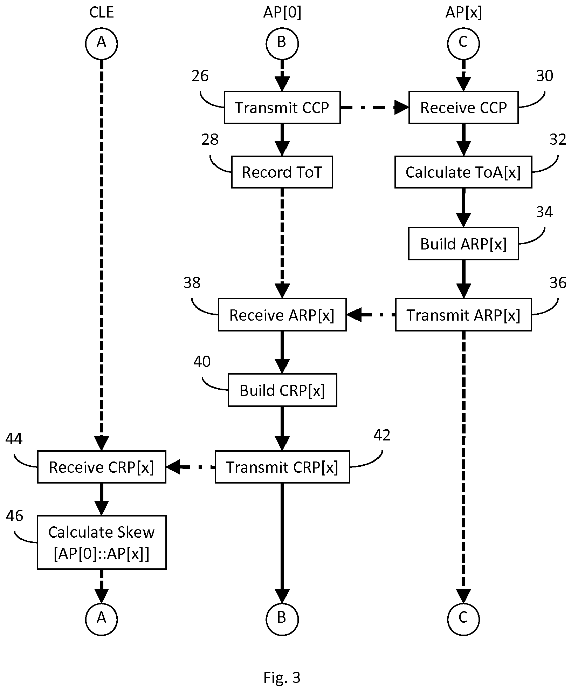

As shown in both Fig. 1 and Fig. 2, AP[0] is selectively configured by CLE 12 as the network *anchor,* thus requiring all time (and distance) references to be calculated with respect to the AP[0] clock (position). In accordance with a first embodiment of our invention, illustrated in Fig. 3, AP[0] is adapted periodically to develop and transmit a multi-bit **clock calibration packet** (CCP) (step 26), and then to record the actual *time of transmission* (*ToT*) of the CCP, with respect to the AP[0] clock (step 28). Upon receipt (step 30), each receiving AP[x] will calculate the *time of arrival* (*ToA*) of the CCP from AP[0], ToA[x], with respect to the AP[x] clock (step 32). (Note: for convenience of reference, we here have employed x as a shorthand summary for our full construct "0:x::x", wherein: the first numeral indicates the transmitting AP, in this case AP[0]; the x following the single colon indicating the receiving AP, generically referred to as AP[x]; and the x following the double colon indicating the respective time base, in this case the timebase of the local AP, namely AP[x].) ToA[x] may now be used to develop (step 34) and transmit a respective **AP response packet (ARP[x])** (step 36). Upon receipt (step 38), AP[0] will develop (step 40) and transmit to the CLE 12 a respective **clock response packet (CRP[x])** having embedded therein both the ToT[0] and the ToA[x] (step 42). From the known, fixed distances d between each of the APs, CLE 12 can calculate actual ToA[0] (*i.e.*, with respect to the AP[0] clock) of the CCP by each of the non-anchor APs (step 44), and thereafter use the difference, or *skew,* between the reported ToA[x] and actual ToA[0] to normalize time references returned by the respective AP[x] to the AP[0] clock (step 46). So long as this clock calibration process is performed sufficiently frequently, CLE 12 will be able effectively to track *drift* between the several AP clocks. In general, the desired frequency of CCPs is a function of the short term stability of the *clock oscillators* in the various APs.

By way of illustration, let us posit that AP[1]'s clock is 1% faster than AP[0]'s clock, and we want to adjust AP[1]'s reported CCP arrival time references to AP[0]'s timebase. Assume for this example that a packet is sent by AP[0] every 200 clock counts. Say a CCP arrives at AP[1] at count 504 by AP[1]'s clock, but the CLE 12 calculates (from known physical network distances) that it arrived when AP[0]'s clock was 100. Now the CLE knows that a count of 504 in AP[1]'s timebase is equivalent to 100 in AP[0]'s timebase. So, 200 AP[0] counts later another packet arrives at AP[1]. From AP[0]'s sending report the CLE calculates it will arrive at count 300 by AP[0]'s clock. Because AP[1]'s timebase is 1% faster, it reports an arrival time of 706. Now the CLE knows that a count of 706 in AP[1]'s timebase is equivalent to 300 in AP[0]'s timebase. The CLE can now normalize any tag arrival reports from AP[1] with a count of anywhere between 504 and 706 by *linear interpolation: e.g.,* a count of 605 from AP[1] is equivalent to 200 in AP[0]'s timebase. Now, if a tag report arrives from AP[1] with a count higher than 706, the CLE can either wait for another CCP report from AP[1] and interpolate as before, or *extrapolate* using previous CCP data: *e.g.,* a tag report of 807 would be converted to 400. Note that although the above normalization approach adjusts relative receive time references, transmit time references could equally be used for synchronization, wherein CCP send time references may be calculated by subtracting ToF from receive time references, rather than receive time references being calculated from send time references by adding ToF. We recognize, however, that rather than our proposed simple interpolation, other more sophisticated, well known interpolation methods may be used. For example, we might consider using the following:

$$
ToA[tag:1::0] = ToF[0:1] + ToT[0:1::0]_{i-1} +
$$

$$
\frac{\left(ToA[tag:1::1] - ToA[0:1::1]_{i-1}\right) * \left(ToT[0:1::0]_i - ToT[0:1::0]_{i-1}\right)}{\left(ToA[0:1::1]_i - ToA[0:1::1]_{i-1}\right)}
$$

$$[Eq.1]$$

where: [*tag:x::y*] denotes that the ToA is for a message (sometimes referred to as a '*blink*') from the tag received by AP[x] and converted to the AP[y]'s timebase.

In one alternate embodiment, each AP may report independently to the CLE 12 using, *e.g.*, wireline. In either embodiment, however, the CLE 12 will be able to maintain normalization factors for all APs in the network 10, thereby enabling precise location of all mobile tags being monitored by the network 10.

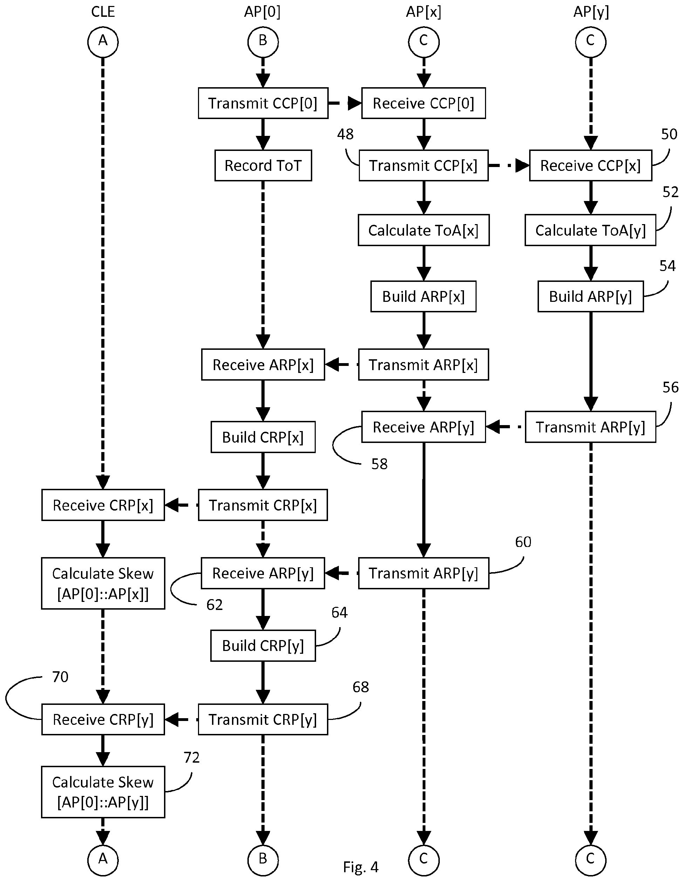

As shown in Fig. 4 (in which only new steps are enumerated), our invention can be easily adapted to include APs that are outside the effective transmission range 24 of the anchor AP[0]. In this embodiment, CLE 12 can designate a selected non-anchor AP[x] to transmit, in response to receiving the original CCP[0], a new CCP[x] to a more remote AP[y] (step 48). Upon receipt (step 50), AP[y] will calculate the ToA[y] of the CCP[x] from AP[x], with respect to the AP[y] clock (step 52). The resulting ToA[y] will then be used to develop (step 54) and transmit a respective ARP[y]) (step 56). Upon receipt (step 58), AP[x] will relay the ARP[y] to the AP[0] (step 60). Upon receipt (step 62), AP[0] will develop (step 64) and transmit to the CLE 12 a respective CRP[y] having embedded therein both the ToT[0] and the ToA[y] (step 68). From the known, fixed distances d between each of the APs, CLE 12 can calculate actual ToA of the CCP[x] reported by each of the remote APs (step 70), and thereafter use the frequency offset, or *skew,* between the reported and actual ToA to normalize time references returned by the respective AP to the AP[0] clock (step 72).

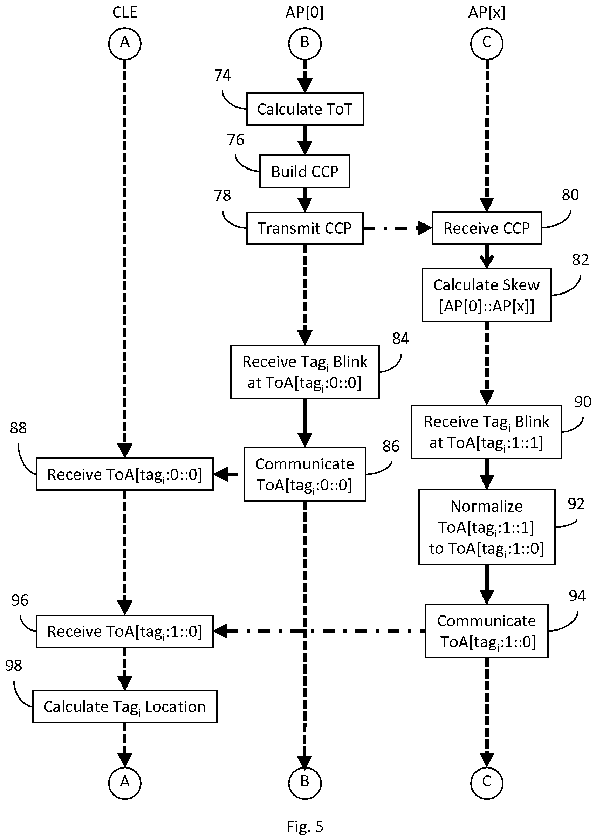

In the alternate embodiment shown in Fig. 5, all non-anchor APs are adapted to report directly to the CLE 12 in response to receiving a CCP from anchor AP[0], thereby relieving AP[0] of the task of developing and relaying the various CRP. In this embodiment, AP[0] is adapted in accordance with a further one of our inventions (to be disclosed in detail below) to develop, in advance of actual transmission of the CCP, the anticipated ToT (step 74), and to embed that ToT in a selected position in the CCP (step 76) prior to transmission (step 78). Upon receipt (step 80), each receiving AP[x] is further adapted in accordance with yet another of our inventions (also to be disclosed in detail below) to calculate the skew, [AP[0]::AP[x]], between the local AP[x] clock and the AP[0] clock (step 82). In one embodiment, to be discussed below, AP[1] may use the calculated skew to synchronize the local clock to the AP[0] clock.

Continuing now with routine network operation, AP[0] receives a blink from tagi at a time of arrival, ToA[tag$_i$:0::0], referenced to the first timebase (step 84), and, since the ToA[tag$_i$:0::0] is already referenced to the first timebase, proceeds to communicate to the CLE 12 the ToA[tag$_i$:0::0] (steps 86 and 88). Some small time interval later, due to different topological positions of the APs, AP[1] now receives the same blink from tagi but at a time of arrival, ToA[tag$_i$:1::1], referenced to the second timebase (step 90). Using the known skew between the first and second timebases, AP[1] can locally normalize the ToA[tag$_i$:1::1] to a time of arrival, ToA[tag$_i$:1::0], referenced to the first timebase (step 92), and then communicate the normalized ToA[tag$_i$:1::0] to the CLE (steps 94 and 96). Later, in response to receiving a sufficient number of ToAs for the same blink from tag$_i$, *e.g.,* at least four (4), the CLE may calculate the topological location of tagi as a function of the known location of AP[1] and the set of all ToAs for the same blink from tagi (step 98).

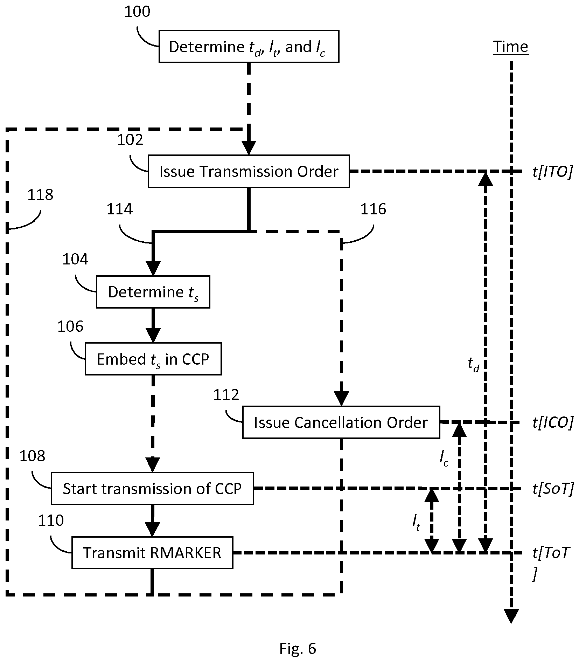

As noted above, AP[0] may be adapted dynamically to predict the actual ToT of each CCP. The IEEE 802.15.4a standard nominates a specific part of the frame, *i.e.,* the first pulse of the *PHY Header,* as the RMARKER. Therefore, let us designate the precise time that the RMARKER in the CCP message leaves AP[0]'s antenna (not shown but necessarily present) as the **send time** of that CCP. We propose the following approach, illustrated in Fig. 6:

1. Determine the time delay, $t_d$, between the time that a **transmission order** is issued, (*t[ITO]*), and the actual time of transmission of the first bit of the RMARKER at AP[0]'s antenna, (*t[ToT]*) (step 100):

$$t_d = t[ITO] - t[ToT] \qquad \text{[Eq.2]}$$

This delay can be determined by calculation during design or measured during operation, and, preferably, both. Preferably, this delay is periodically recalibrated.

2. At time a selected t[ITO], issue a transmission order to AP[0] to transmit a CCP (step 102).

3. Calculate the projected send time, $t_s$, of the RMARKER (step 104):

$$t_s = t_r + t_d \qquad \text{[Eq.3]}$$

4. Embed the calculated, multi-bit send time in the RMARKER field of the ordered CCP (step 106).

5. Start transmission of the CCP (step 108).

6. Transmit the RMARKER (step 110).

Now, because of other system activity, it may happen that AP[0] will be unable to achieve transmission of an ordered CCP message at the projected send time. Accordingly, it is desirable to cancel the pending CCP message so as to prevent transmission of the CCP message with a *stale* send time as follows:

1. Predetermine (by calculation or measurement), the transmitter latency, $l_t$, between start of transmission of the CCP frame, *t[SoT],* and the time of transmission of the first bit of the embedded RMARKER, *t[ToT]* (a first enhancement of step 100).

2. Predetermine (by calculation or measurement), the cancellation latency, *lc,* being the minimum time between issuance of a **cancellation order**, *t[ICO]*, and successful cancellation of a pending transmission order (a second enhancement of step 100).

3. Issue the cancellation order if transmission has not been initiated at or before time *t[ICO]* (step 112).

In Fig. 6, after step 102, control flow effectively *forks* into parallel, independent *threads,* with the left thread 114 representing the normal control flow, and the right thread 116 representing the exception control flow. For clarity, we have depicted flow of time via an annotated *vector* extending vertically along the right side of Fig. 6. During operation, if CCP transmission actually starts before the calculated t[ICO], thread 114 will retain control and complete CCP transmission; otherwise, thread 116 will assert control and cancel CCP transmission. We have indicated (via dashed feedback path 118) that the illustrated process will normally be recursive, operating periodically according to a desired schedule.

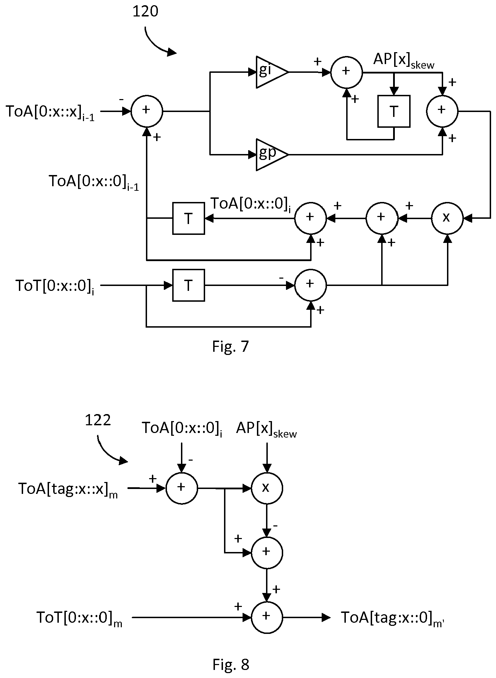

As shown in Fig. 7, CLE 12 may be adapted to normalize ToA reports from all non-anchor AP[x]s with respect to the reported ToT[0] using a *digital phase locked loop* (*DPLL*) 120, or other preferred form of *Kalman filter.* In Fig. 7, the input $AP[x]_{i-1}$ comprises AP[x]'s reported ToA of CCP[i-1], and the input $AP[0]_i$ comprises AP[0]'s reported ToT of CCP[i] plus the calculated ToF of CCP[i] from AP[0] to AP[x], *i.e.,* the actual ToA of CCP[i] at AP[x] as normalized to AP[0] clock. Following is a pseudocode instantiation of our proposed DPLL:

```
[Pcode 1] function ap1Err = clocktrack
nReports = 1000;
interval = 1000e-3; % 100ms between CCPs
errorStd = 0.3e-9; % 0.3 ns error std
ppm = 20; % crystal offset
gp = 0.1; % proportional arm
gi = 0.01; % integral arm;
ap0Reports = [0 cumsum(interval/2+interval *
 (rand(1,nReports)-0.5))];
 ap1Reports = 10 * interval + ap0Reports * (1+ppm/1e6);
 ap1Est = zeros(size(ap1Reports)); % initial estimate
 ap1Err = ap1Est;
 intArm = ap1Est;
 ap1FreqOffsetEst = ap1Est;% initial skew
 offsetPhase = ap1Est;
 ap0Diff = [diff(ap0Reports) interval];
 % now add some errors
 ap1Reports = ap1Reports + randn(size(ap1Reports)) *
  errorStd;
 % initialize 1st ToA estimate of 1st report
 ap1Est(1) = ap1Reports(1);
 % initialize intArm to first estimate of skew
 intArm(1) = (ap1Reports(2)-ap1Reports(1))/ap0Diff(1)-1;
 % now operate DPLL over nReports
 for (iReport = 2:nReports-1)
 {
ap1Err(iReport-1) = (ap1Reports(iReport-1) -
  ap1Est(iReport-1))/interval;
intArm(iReport) = gi * ap1Err(iReport-1) +
  intArm(iReport-1);
ap1FreqOffsetEst(iReport) = gp * ap1Err(iReport-1) +
  intArm(iReport); % calculate new skew
offsetPhase(iReport) = ap0Diff(iReport-1) *
  ap1FreqOffsetEst(iReport) ;
ap1Est(iReport) = ap1Est(iReport-1) + ap0Diff(iReport-1)
  + offsetPhase(iReport); % calculate new ToA estimate
 }
 end
```

If desired, the CLE 12 may employ known *figure of merit* (*FoM*) or other known statistical methods to identify and disregard rogue CCP ToA reports. In the alternative, the CLE 12 may selectively weight the error term used by our DPLL 120.

Having determined the skew between the AP[0] clock and the AP[x] clock, we propose to use a clock normalizer 122, such as that shown in Fig. 8, to normalize, with respect to the current $AP[0]_m$, subsequently reported time references $AP[x]_m$ associated, for example, with mobile tags. In this embodiment, our CCP transmission method and related apparatus will facilitate normalization of CCP-related time references reported to the CLE by all APs, and, when used in combination, our clock normalization method and related apparatus will facilitate normalization by the CLE of tag-related time references reported by all APs.

Building now on the capability of AP[0] to embed in each CCP the actual ToT, we propose to implement in at least each non-anchor AP[x] a DPLL 120 adapted to synchronize the local AP[x] clock to the AP[0] clock. In this embodiment, each AP[x] is now capable of locally normalizing all time references with respect to the AP[0] clock, including mobile tag-related reports, thereby relieving the CLE 12 of the need to normalize received time references. Of course, it may still be desirable for other reasons to have each of the APs report to the CLE 12 selected operating parameters of the local DPLL 120.

In accordance with yet another embodiment, AP[0] may wait until a first $CCP[0]_i$ has been successfully transmitted, record the precise time, $t[ToT]_i$, that the RMARKER is transmitted, and then embed the recorded $t[ToT]_i$ in the next $CCP[0]_{i+1}$. Using this method, the embedded $t[ToT]_i$ is determined *a posteriori* and is, therefore, always assured to be precise.

Thus it is apparent that we have provided an improved wireless clock synchronization method and apparatus for use in a UWB communication system. In particular, we submit that our method and apparatus provides performance generally comparable to the best prior art techniques but without the disadvantages of known implementations of such prior art techniques. Therefore, we intend that our invention encompass all such variations and modifications as fall within the scope of the appended claims.

**Claims**

1.    An ultra-wideband, UWB, communication network comprising:

   a plurality of access points, APs, comprising a first access point, AP[0], having a first timebase, and a second access point, AP[1], having a second timebase; and
   a central location engine, CLE;

   wherein:

   the CLE is adapted to store a first time of flight, ToF[0:1], between AP[0] and AP[1];
   AP[0] is adapted to develop and transmit a first clock synchronization packet, CCP[0], to AP[1] at a first selected time of transmission, ToT[0];
   AP[1] is adapted to receive the CCP[0] and, in response, to develop and transmit a first AP response packet, ARP[1], to AP[0], the ARP[1] having embedded therein a first time of arrival, ToA[0:1::1], referenced to the second timebase;
   AP[0] is further adapted to receive the ARP[1] and, in response, to develop and transmit a first clock response packet, CRP[1], to the CLE, the CRP[1] having embedded therein the ToA[0:1::1] and the ToT; and
   the CLE is adapted to receive the CRP[1] and, in response, to calculate a first skew between the first and second timebases as a function of the ToT, the ToA[1] and the ToF[0:1] and to develop a time of arrival, ToA[0:1::0], referenced to the first timebase, from the ToA[0:1::1] using a digital phase locked loop, DPLL.

2.    The network of claim 1 further comprising a third access point, AP[2], having a third timebase, wherein:

   the CLE is adapted to store a second time of flight, ToF[1:2], between AP[1] and AP[2];
   AP[1] is further adapted selectively to transmit a second CCP[1] to AP[2] at a second selected time of transmission, ToT[1];
   AP[2] is adapted to receive the transmitted CCP[1] and, in response, to develop and transmit a second ARP[2] to AP[1], the ARP[2] having embedded therein a second time of arrival, ToA[2], referenced to the third timebase;
   AP[1] is further adapted selectively to retransmit the ARP[2] to AP[0];
   AP[0] is further adapted to receive the ARP[2] and, in response, to develop and transmit a second clock response packet, CRP[2], to the CLE, the CRP[2] having embedded therein the ToA[2]; and
   the CLE is adapted to receive the CRP[2] and, in response, to calculate a second skew between the first and third timebases as a function of the ToT[1], the ToA[2] and the ToF[1:2].

3. An ultra-wideband, UWB, communication network comprising:

a plurality of access points, APs, comprising a first access point, AP[0], having a first timebase, and a second access point, AP[1], having a second timebase; and
a central location engine, CLE;

wherein:

the CLE is adapted to store a first time of flight, ToF[0:1], between AP[0] and AP[1];
AP[0] is adapted to develop and transmit a clock synchronization packet, CCP, to AP[1] at a selected time of transmission, ToT;
AP[1] is adapted to receive the CCP and, in response, to develop and transmit a first clock response packet, CRP[1], to the CLE, the CRP[1] having embedded therein a first time of arrival, ToA[0:1::1], referenced to the second timebase, and the ToT; and
the CLE is adapted to receive the CRP[1] and, in response, to calculate a first skew between the first and second timebases as a function of the ToT, the ToA[1] and the ToF[0:1] and to develop a time of arrival, ToA[0:1::0], referenced to the first timebase, from the ToA[0:1::1] using a digital phase locked loop, DPLL.

4. The network of claim 3 wherein the CLE develops the time of arrival, ToA[0:1::0], referenced to the first timebase, from the ToA[0:1::1] using a normalizer.

5. The network of either claim 3 or claim 4 wherein AP[1] is further adapted selectively to develop and transmit to the CLE a first tag report packet having embedded therein a first tag time reference, ToA[tag:1::1], referenced to the second timebase.

6. The network of any of claims 3 to 5 further comprising a third access point, AP[2], having a third timebase, wherein:

the CLE is adapted to store a second time of flight, ToF[1:2], between AP[1] and AP[2];
AP[1] is further adapted selectively to transmit a second CCP[1] to AP[2] at a second selected time of transmission, ToT[1];
AP[2] is adapted to receive the transmitted CCP[1] and, in response, to develop and transmit a second clock response packet, CRP[2], to the CLE, the CRP[2] having embedded therein a second time of arrival, ToA[2], referenced to the third timebase; and
the CLE is adapted to receive the CRP[2] and, in response, to calculate a second skew between the first and third timebases as a function of the ToT[1], the ToA[2] and the ToF[1:2].

7. An ultra-wideband, UWB, communication network comprising a plurality of access points, APs, comprising a first access point, AP[0], having a first timebase, and a second access point, AP[1], having a second timebase, wherein:

AP[0] is adapted to develop a clock synchronization packet, CCP, for transmission at a selected time of transmission, ToT, the ToT being embedded in the CCP, and to transmit the CCP to AP[1] at the selected ToT; and
AP[1] is adapted to receive the CCP at a first time of arrival, ToA[0:1::1], referenced to the second timebase, and, in response, to develop a second time of arrival, ToA[0:1::0], referenced to the first timebase as a function of the ToT, the ToA[0:1::1] and a first predetermined time of flight, ToF[0:1], between AP[0] and AP[1] using a digital phase locked loop, DPLL.

8. The network of claim 7 wherein AP[1] is further adapted to:

receive a tag blink having a third time of arrival, ToA[tag:1::1], referenced to the second timebase; and
develop and transmit a first tag report packet having embedded therein a fourth time of arrival, ToA[tag:1::0], referenced to the first timebase.

9. The network of either claim 7 or claim 8 wherein AP[1] develops the ToA[tag:1::0] from the ToA[tag:1::1] a normalizer.

10. The network of any of claims 7 to 9 wherein the network further comprises a central location engine, CLE, and wherein:

AP[0] is further adapted to transmit to the CLE the ToT; and
AP[1] is further adapted to transmit to the CLE the ToA[0:1::0].

11. The network of any of claims 7 to 10 further comprising a third access point, AP[2], having a third timebase, wherein:

AP[1] is further adapted selectively to retransmit the CCP to AP[2]; and
AP[2] is adapted to receive the CCP at a first time of arrival, ToA[2], referenced to the third timebase, and, in response, to develop a second time of arrival, ToA[2], referenced to the first timebase as a function of the ToT, the ToA[2] and a first predetermined time of flight, ToF[0:2], between AP[0] and AP[2].

12. The network of claim 11 wherein AP[2] is further adapted selectively to develop and transmit a second tag report packet having embedded therein a second tag time reference referenced to the first timebase.

13. A method for use in an ultra-wideband (UWB,) communication network, the network comprising:

a plurality of access points, APs, comprising a first access point, AP[0], having a first timebase, and a second access point, AP[1], having a second timebase; and
a central location engine, CLE;

wherein the method comprises:

storing, by the CLE, a first time of flight, ToF[0:1], between AP[0] and AP[1];
developing and transmitting, by AP[0], a first clock synchronization packet, CCP[0], to AP[1] at a first selected time of transmission, ToT[0];
receiving, by AP[1], the CCP[0] and, in response, AP[1] developing and transmitting a first AP response packet, ARP[1], to AP[0], the ARP[1] having embedded therein a first time of arrival, ToA[0:1::1], referenced to the second timebase;
receiving, by AP[0], the ARP[1] and, in response, AP[0] developing and transmitting a first clock response packet, CRP[1], to the CLE, the CRP[1] having embedded therein the ToA[0:1::1] and the ToT; and
receiving, by the CLE, the CRP[1] and, in response, the CLE calculating a first skew between the first and second timebases as a function of the ToT, the ToA[1] and the ToF[0:1] and developing a time of arrival, ToA[0:1::0], referenced to the first timebase, from the ToA[0:1::1] using a digital phase locked loop, DPLL.

14. A method for use in an ultra-wideband, UWB, communication network comprising:

a plurality of access points, APs, comprising a first access point, AP[0], having a first timebase, and a second access point, AP[1], having a second timebase; and
a central location engine, CLE;

wherein the method comprises:

storing, by the CLE, a first time of flight, ToF[0:1], between AP[0] and AP[1];
developing and transmitting, by AP[0], a clock synchronization packet, CCP, to AP[1] at a selected time of transmission, ToT;
receiving, by AP[1], the CCP and, in response, AP[1] developing and transmitting a first clock response packet, CRP[1], to the CLE, the CRP[1] having embedded therein a first time of arrival, ToA[0:1::1], referenced to the second timebase, and the ToT; and
receiving, by the CLE, the CRP[1] and, in response, the CLE calculating a first skew between the first and second timebases as a function of the ToT, the ToA[1] and the ToF[0:1] and developing a time of arrival, ToA[0:1::0], referenced to the first timebase, from the ToA[0:1::1] using a digital phase locked loop, DPLL.

15. A method for use in an ultra-wideband, UWB, communication network comprising a plurality of access points, APs, comprising a first access point, AP[0], having a first timebase, and a second access point, AP[1], having a second timebase, wherein the method comprises:

developing, by AP[0], a clock synchronization packet, CCP, for transmission at a selected time of transmission, ToT, the ToT being embedded in the CCP, and AP[0] transmitting the CCP to AP[1] at the selected ToT; and
receiving, by AP[1], the CCP at a first time of arrival, ToA[0:1::1], referenced to the second timebase, and, in response, AP[1] developing a second time of arrival, ToA[0:1::0], referenced to the first timebase as a function of the ToT, the ToA[0:1::1] and a first predetermined time of flight, ToF[0:1], between AP[0] and AP[1] using a digital phase locked loop, DPLL.

**Patentansprüche**

1. Ultrabreitband-Kommunikationsnetzwerk, UWB-Kommunikationsnetzwerk, umfassend:

   mehrere Zugangspunkte, AP, umfassend einen ersten Zugangspunkt, AP[0], mit einer ersten Zeitbasis und einen zweiten Zugangspunkt, AP[1], mit einer zweiten Zeitbasis; und
   eine zentrale Lokalisierungsengine, CLE;
   wobei:

   die CLE dazu eingerichtet ist, eine erste Laufzeit, ToF[0:1], zwischen AP[0] und AP[1] zu speichern;
   AP[0] dazu eingerichtet ist, ein erstes Taktsynchronisierungspaket, CCP[0], zu entwickeln und an AP[1] zu einer ersten ausgewählten Übertragungszeit, ToT[0], zu übertragen;
   AP[1] dazu eingerichtet ist, das CCP[0] zu empfangen und als Reaktion darauf ein erstes AP-Antwortpaket, ARP[1], zu entwickeln und an AP[0] zu übertragen, wobei das ARP[1] eine erste Ankunftszeit, ToA[0:1::1], die sich auf die zweite Zeitbasis bezieht, darin eingebettet aufweist;
   AP[0] weiterhin dazu eingerichtet ist, das ARP[1] zu empfangen und als Reaktion darauf ein erstes Takt-Antwortpaket, CRP[1], zu entwickeln und an die CLE zu übertragen, wobei das CRP[1] die ToA[0:1::1] und die ToT darin eingebettet aufweist; und
   die CLE dazu eingerichtet ist, das CRP[1] zu empfangen und als Reaktion darauf einen ersten Versatz zwischen der ersten und der zweiten Zeitbasis in Abhängigkeit von der ToT, der ToA[1] und der ToF[0:1] zu berechnen und eine Ankunftszeit, ToA[0:1::0], die sich auf die erste Zeitbasis bezieht, aus der ToA[0:1::1] unter Verwendung eines digitalen Phasenregelkreises, DPLL, zu entwickeln.

2. Netzwerk nach Anspruch 1, weiterhin umfassend einen dritten Zugangspunkt, AP[2], mit einer dritten Zeitbasis, wobei:

   die CLE dazu eingerichtet ist, eine zweite Laufzeit, ToF[1:2], zwischen AP[1] und AP[2] zu speichern;
   AP[1] weiterhin dazu eingerichtet ist, selektiv ein zweites CCP[1] an AP[2] zu einer zweiten ausgewählten Übertragungszeit, ToT[1], zu übertragen;
   AP[2] dazu eingerichtet ist, das übertragene CCP[1] zu empfangen und als Reaktion darauf ein zweites ARP[2] zu entwickeln und an AP[1] zu übertragen, wobei das ARP[2] eine zweite Ankunftszeit, ToA[2], die sich auf die dritte Zeitbasis bezieht, darin eingebettet aufweist;
   AP[1] weiterhin dazu eingerichtet ist, selektiv das ARP[2] an AP[0] erneut zu übertragen;
   AP[0] weiterhin dazu eingerichtet ist, das ARP[2] zu empfangen und als Reaktion darauf ein zweites Takt-Antwortpaket, CRP[2], zu entwickeln und an die CLE zu übertragen, wobei das CRP[2] die ToA[2] darin eingebettet aufweist; und
   die CLE dazu eingerichtet ist, das CRP[2] zu empfangen und als Reaktion darauf einen zweiten Versatz zwischen der zweiten und der dritten Zeitbasis in Abhängigkeit von der ToT[1], der ToA[2] und der ToF[1:2] zu berechnen.

3. Ultrabreitband-Kommunikationsnetzwerk, UWB-Kommunikationsnetzwerk, umfassend:

   mehrere Zugangspunkte, AP, umfassend einen ersten Zugangspunkt, AP[0], mit einer ersten Zeitbasis und einen zweiten Zugangspunkt, AP[1], mit einer zweiten Zeitbasis; und
   eine zentrale Lokalisierungsengine, CLE;
   wobei:

   die CLE dazu eingerichtet ist, eine erste Laufzeit, ToF[0:1], zwischen AP[0] und AP[1] zu speichern;
   AP[0] dazu eingerichtet ist, ein Taktsynchronisierungspaket, CCP, zu entwickeln und an AP[1] zu einer ausgewählten Übertragungszeit, ToT, zu übertragen;
   AP[1] dazu eingerichtet ist, das CCP zu empfangen und als Reaktion darauf ein erstes Takt-Antwortpaket, CRP[1], zu entwickeln und an die CLE zu übertragen, wobei das CRP[1] eine erste Ankunftszeit, ToA[0:1::1], die sich auf die zweite Zeitbasis bezieht, und die ToT darin eingebettet aufweist; und
   die CLE dazu eingerichtet ist, das CRP[1] zu empfangen und als Reaktion darauf einen ersten Versatz zwischen der ersten und der zweiten Zeitbasis in Abhängigkeit von der ToT, der ToA[1] und der ToF[0:1] zu berechnen und eine Ankunftszeit, ToA[0:1::0], die sich auf die erste Zeitbasis bezieht, aus der ToA[0:1::1] unter Verwendung eines digitalen Phasenregelkreises, DPLL, zu entwickeln.

4. Netzwerk nach Anspruch 3, wobei die CLE die Ankunftszeit, ToA[0:1::0], die sich auf die erste Zeitbasis bezieht, aus der ToA[0:1::1] unter Verwendung eines Normalisators entwickelt.

5. Netzwerk nach entweder Anspruch 3 oder Anspruch 4, wobei AP[1] weiterhin dazu eingerichtet ist, selektiv ein erstes Tag-Berichtspaket, das eine erste Tag-Zeitreferenz, ToA[tag:1::1], die sich auf die zweite Zeitbasis bezieht, darin eingebettet aufweist, zu entwickeln und an die CLE zu übertragen.

6. Netzwerk nach einem der Ansprüche 3 bis 5, weiterhin umfassend einen dritten Zugangspunkt, AP[2], mit einer dritten Zeitbasis, wobei:

die CLE dazu eingerichtet ist, eine zweite Laufzeit, ToF[1:2], zwischen AP[1] und AP[2] zu speichern; AP[1] weiterhin dazu eingerichtet ist, selektiv ein zweites CCP[1] an AP[2] zu einer zweiten ausgewählten Übertragungszeit, ToT[1], zu übertragen; AP[2] dazu eingerichtet ist, das übertragene CCP[1] zu empfangen und als Reaktion darauf ein zweites Takt-Antwortpaket, CRP[2], zu entwickeln und an die CLE zu übertragen, wobei das CRP[2] eine zweite Ankunftszeit, ToA[2], die sich auf die dritte Zeitbasis bezieht, darin eingebettet aufweist; und die CLE dazu eingerichtet ist, das CRP[2] zu empfangen und als Reaktion darauf einen zweiten Versatz zwischen der zweiten und der dritten Zeitbasis in Abhängigkeit von der ToT[1], der ToA[2] und der ToF[1:2] zu berechnen.

7. Ultrabreitband-Kommunikationsnetzwerk, UWB-Kommunikationsnetzwerk, umfassend mehrere Zugangspunkte, AP, umfassend einen ersten Zugangspunkt, AP[0], mit einer ersten Zeitbasis und einen zweiten Zugangspunkt, AP[1], mit einer zweiten Zeitbasis, wobei:

AP[0] dazu eingerichtet ist, ein Taktsynchronisierungspaket, CCP, zur Übertragung zu einer ausgewählten Übertragungszeit, ToT, zu entwickeln, wobei die ToT in dem CCP eingebettet ist, und das CCP an AP[1] zu der ausgewählten ToT zu übertragen; und AP[1] dazu eingerichtet ist, das CCP zu einer ersten Ankunftszeit, ToA[0:1::1], die sich auf die zweite Zeitbasis bezieht, zu empfangen und als Reaktion darauf eine zweite Ankunftszeit, ToA[0:1::0], die sich auf die erste Zeitbasis bezieht, in Abhängigkeit von der ToT, der ToA[0:1::1] und einer ersten vorherbestimmten Laufzeit, ToF[0:1], zwischen AP[0] und AP[1] unter Verwendung eines digitalen Phasenregelkreises, DPLL, zu entwickeln.

8. Netzwerk nach Anspruch 7, wobei AP[1] weiterhin eingerichtet ist zum:

Empfangen eines Tag-Blinks mit einer dritten Ankunftszeit, ToA[tag:1::1], die sich auf die zweite Zeitbasis bezieht; und Entwickeln und Übertragen eines ersten Tag-Berichtspakets, das eine vierte Ankunftszeit, ToA[tag:1::0], die sich auf die erste Zeitbasis bezieht, darin eingebettet aufweist.

9. Netzwerk nach entweder Anspruch 7 oder Anspruch 8, wobei AP[1] die ToA[tag:1::0] aus der ToA[tag:1::1] eines Normalisators entwickelt.

10. Netzwerk nach einem der Ansprüche 7 bis 9, wobei das Netzwerk weiterhin eine zentrale Lokalisierungsengine, CLE, umfasst und wobei:

AP[0] weiterhin dazu eingerichtet ist, die ToT an die CLE zu übertragen; und AP[1] weiterhin dazu eingerichtet ist, die ToA[0:1::0] an die CLE zu übertragen.

11. Netzwerk nach einem der Ansprüche 7 bis 10, weiterhin umfassend einen dritten Zugangspunkt, AP[2], mit einer dritten Zeitbasis, wobei:

AP[1] weiterhin dazu eingerichtet ist, selektiv das CCP an AP[2] erneut zu übertragen; und AP[2] dazu eingerichtet ist, das CCP zu einer ersten Ankunftszeit, ToA[2], die sich auf die dritte Zeitbasis bezieht, zu empfangen und als Reaktion darauf eine zweite Ankunftszeit, ToA[2], die sich auf die erste Zeitbasis bezieht, in Abhängigkeit von der ToT, der ToA[2] und einer ersten vorherbestimmten Laufzeit, ToF[0:2], zwischen AP[0] und AP[2] zu entwickeln.

12. Netzwerk nach Anspruch 11, wobei AP[2] weiterhin dazu eingerichtet ist, selektiv ein zweites Tag-Berichtspaket, das eine zweite Tag-Zeitreferenz, die sich auf die erste Zeitbasis bezieht, darin eingebettet aufweist, zu entwickeln und zu übertragen.

13. Verfahren zur Verwendung in einem Ultrabreitband-Kommunikationsnetzwerk, UWB-Kommunikationsnetzwerk, wobei das Netzwerk umfasst:

mehrere Zugangspunkte, AP, umfassend einen ersten Zugangspunkt, AP[0], mit einer ersten Zeitbasis und einen zweiten Zugangspunkt, AP[1], mit einer zweiten Zeitbasis; und
eine zentrale Lokalisierungsengine, CLE;
wobei das Verfahren umfasst:

Speichern einer ersten Laufzeit, ToF[0:1], zwischen AP[0] und AP[1] durch die CLE;
Entwickeln und Übertragen eines ersten Taktsynchronisierungspakets, CCP[0], an AP[1] zu einer ersten ausgewählten Übertragungszeit, ToT[0], durch AP[0];
Empfangen des CCP[0] durch AP[1] und als Reaktion darauf Entwickeln und Übertragen eines ersten AP-Antwortpakets, ARP[1], an AP[0] durch AP[1], wobei das ARP[1] eine erste Ankunftszeit, ToA[0:1::1], die sich auf die zweite Zeitbasis bezieht, darin eingebettet aufweist;
Empfangen des ARP[1] durch AP[0] und als Reaktion darauf Entwickeln und Übertragen eines ersten Takt-Antwortpakets, CRP[1], an die CLE durch AP[0], wobei das CRP[1] die ToA[0:1::1] und die ToT darin eingebettet aufweist; und
Empfangen des CRP[1] durch die CLE und als Reaktion darauf Berechnen eines ersten Versatzes zwischen der ersten und der zweiten Zeitbasis in Abhängigkeit von der ToT, der ToA[1] und der ToF[0:1] und Entwickeln einer Ankunftszeit, ToA[0:1::0], die sich auf die erste Zeitbasis bezieht, aus der ToA[0:1::1] unter Verwendung eines digitalen Phasenregelkreises, DPLL, durch die CLE.

14. Verfahren zur Verwendung in einem Ultrabreitband-Kommunikationsnetzwerk, UWB-Kommunikationsnetzwerk, umfassend:

mehrere Zugangspunkte, AP, umfassend einen ersten Zugangspunkt, AP[0], mit einer ersten Zeitbasis und einen zweiten Zugangspunkt, AP[1], mit einer zweiten Zeitbasis; und
eine zentrale Lokalisierungsengine, CLE;
wobei das Verfahren umfasst:

Speichern einer ersten Laufzeit, ToF[0:1], zwischen AP[0] und AP[1] durch die CLE;
Entwickeln und Übertragen eines Taktsynchronisierungspakets, CCP, an AP[1] zu einer ausgewählten Übertragungszeit, ToT, durch AP[0];
Empfangen des CCP durch AP[1] und als Reaktion darauf Entwickeln und Übertragen eines ersten Takt-Antwortpakets, CRP[1], an die CLE durch AP[1], wobei das CRP[1] eine erste Ankunftszeit, ToA[0:1::1], die sich auf die zweite Zeitbasis bezieht, und die ToT darin eingebettet aufweist; und
Empfangen des CRP[1] durch die CLE und als Reaktion darauf Berechnen eines ersten Versatzes zwischen der ersten und der zweiten Zeitbasis in Abhängigkeit von der ToT, der ToA[1] und der ToF[0:1] und Entwickeln einer Ankunftszeit, ToA[0:1::0], die sich auf die erste Zeitbasis bezieht, aus der ToA[0:1::1] unter Verwendung eines digitalen Phasenregelkreises, DPLL, durch die CLE.

15. Verfahren zur Verwendung in einem Ultrabreitband-Kommunikationsnetzwerk, UWB-Kommunikationsnetzwerk, umfassend mehrere Zugangspunkte, AP, umfassend einen ersten Zugangspunkt, AP[0], mit einer ersten Zeitbasis und einen zweiten Zugangspunkt, AP[1], mit einer zweiten Zeitbasis, wobei:

Entwickeln eines Taktsynchronisierungspakets, CCP, zur Übertragung zu einer ausgewählten Übertragungszeit, ToT, durch AP[0], wobei die ToT in dem CCP eingebettet ist, und Übertragen des CCP an AP[1] zu der ausgewählten ToT durch AP[0]; und
Empfangen des CCP zu einer ersten Ankunftszeit, ToA[0:1::1], die sich auf die zweite Zeitbasis bezieht, durch AP[1] und als Reaktion darauf Entwickeln einer zweiten Ankunftszeit, ToA[0:1::0], die sich auf die erste Zeitbasis bezieht, in Abhängigkeit von der ToT, der ToA[0:1::1] und einer ersten vorherbestimmten Laufzeit, ToF[0:1], zwischen AP[0] und AP[1] unter Verwendung eines digitalen Phasenregelkreises, DPLL, durch AP[1].

**Revendications**

1. Réseau de communication à bande ultralarge (UWB), comprenant :

   une pluralité de points d'accès (AP) comprenant un premier point d'accès (AP[0]) ayant une première base de temps et un deuxième point d'accès (AP[1]) ayant une deuxième base de temps ; et
   un moteur de localisation central (CLE) ;
   et dans lequel :

   le CLE est conçu pour stocker un premier temps de vol (ToF[0:1]) entre AP[0] et AP[1] ;
   AP[0] est conçu pour développer et transmettre à AP [1] un premier paquet de synchronisation d'horloge (CCP[0]) à un premier temps de transmission (ToT[0]) sélectionné ;
   AP[1] est conçu pour recevoir le CCP[0] et, en réponse, pour développer et transmettre à AP[0] un premier paquet de réponse d'AP (ARP[1]), un premier temps d'arrivée (ToA[0:1::1]), en référence à la deuxième base de temps, étant intégré dans l'ARP[1] ;
   AP[0] est en outre conçu pour recevoir l'ARP[1] et, en réponse, pour développer et transmettre au CLE un premier paquet de réponse d'horloge (CRP[1]), le ToA[0:1::1] et le ToT étant intégrés dans le CRP[1] ; et
   le CLE est conçu pour recevoir le CRP[1] et, en réponse, pour calculer un premier retard de propagation entre les première et deuxième bases de temps en fonction du ToT, du ToA[1] et du ToF[0:1] et pour développer un temps d'arrivée (ToA[0:1::0]), en référence à la première base de temps, à partir du ToA[0:1::1] au moyen d'une boucle numérique à verrouillage de phase (DPLL).

2. Réseau selon la revendication 1, comprenant en outre un troisième point d'accès (AP[2]) ayant une troisième base de temps, et dans lequel :

   le CLE est conçu pour stocker un second temps de vol (ToF[1:2]) entre AP[1] et AP[2] ;
   AP[1] est en outre conçu de manière sélective pour transmettre un second CCP[1] à AP[2] à un second temps de transmission (ToT[1]) sélectionné ;
   AP[2] est conçu pour recevoir le CCP[1] transmis et, en réponse, pour développer et transmettre à AP[1] un second ARP[2], un deuxième temps d'arrivée (ToA[2]), en référence à la troisième base de temps, étant intégré dans l'ARP[2] ;
   AP[1] est en outre conçu de manière sélective pour retransmettre l'ARP[2] à AP[0] ;
   AP[0] est en outre conçu pour recevoir l'ARP[2] et, en réponse, pour développer et transmettre au CLE un second paquet de réponse d'horloge (CRP[2]), le ToA[2] étant intégré dans le CRP[2] ; et
   le CLE est conçu pour recevoir le CRP[2] et, en réponse, pour calculer un second retard de propagation entre les première et troisième bases de temps en fonction du ToT[1], du ToA[2] et du ToF[1:2].

3. Réseau de communication à bande ultralarge (UWB), comprenant :

   une pluralité de points d'accès (AP) comprenant un premier point d'accès (AP[0]) ayant une première base de temps et un deuxième point d'accès (AP[1]) ayant une deuxième base de temps ; et
   un moteur de localisation central (CLE) ;
   et dans lequel :

   le CLE est conçu pour stocker un premier temps de vol (ToF[0:1]) entre AP[0] et AP[1] ;
   AP[0] est conçu pour développer et transmettre à AP[1] un paquet de synchronisation d'horloge (CCP) à un temps de transmission (ToT) sélectionné ;
   AP[1] est conçu pour recevoir le CCP et, en réponse, pour développer et transmettre au CLE un premier paquet de réponse d'horloge (CRP[1]), un premier temps d'arrivée (ToA[0:1::1]), en référence à la deuxième base de temps, et le ToT étant intégrés dans le CRP[1] ; et
   le CLE est conçu pour recevoir le CRP[1] et, en réponse, pour calculer un premier retard de propagation entre les première et deuxième bases de temps en fonction du ToT, du ToA[1] et du ToF[0:1] et pour développer un temps d'arrivée (ToA[0:1::0]), en référence à la première base de temps, à partir du ToA[0:1::1] au moyen d'une boucle numérique à verrouillage de phase (DPLL).

4. Réseau selon la revendication 3, dans lequel le CLE développe le temps d'arrivée (ToA[0:1::0]), en référence à la première base de temps, à partir du ToA[0:1::1] au moyen d'un normaliseur.

5. Réseau selon la revendication 3 ou 4, dans lequel AP[1] est en outre conçu de manière sélective pour développer et transmettre au CLE un premier paquet de rapport d'étiquette, dans lequel est intégrée une première référence de temps d'étiquette (ToA[tag:1::1]), en référence à la deuxième base de temps.

6. Réseau selon l'une quelconque des revendications 3 à 5, comprenant en outre un troisième point d'accès (AP[2]) ayant une troisième base de temps, et dans lequel :

le CLE est conçu pour stocker un second temps de vol (ToF[1:2]) entre AP[1] et AP[2] ;
AP[1] est en outre conçu de manière sélective pour transmettre un second CCP[1] à AP[2] à un second temps de transmission (ToT[1]) sélectionné ;
AP[2] est conçu pour recevoir le CCP[1] transmis et, en réponse, pour développer et transmettre au CLE un second paquet de réponse d'horloge (CRP[2]), un deuxième temps d'arrivée (ToA[2]), en référence à la troisième base de temps, étant intégré dans le CRP[2] ; et
le CLE est conçu pour recevoir le CRP[2] et, en réponse, pour calculer un second retard de propagation entre les première et troisième bases de temps en fonction du ToT[1], du ToA[2] et du ToF[1:2].

7. Réseau de communication à bande ultralarge (UWB) comprenant une pluralité de points d'accès (AP) comprenant un premier point d'accès (AP[0]) ayant une première base de temps et un deuxième point d'accès (AP[1]) ayant une deuxième base de temps, et dans lequel :

AP[0] est conçu pour développer un paquet de synchronisation d'horloge (CCP) en vue d'une transmission à un temps de transmission (ToT) sélectionné, le ToT étant intégré dans le CCP, et pour transmettre le CCP à AP[1] au ToT sélectionné ; et
AP[1] est conçu pour recevoir le CCP à un premier temps d'arrivée (ToA[0:1::1]), en référence à la deuxième base de temps, et, en réponse, pour développer un deuxième temps d'arrivée (ToA[0:1::0]), en référence à la première base de temps, en fonction du ToT, du ToA[0:1::1] et d'un premier temps de vol (ToF[0:1]) prédéterminé entre AP[0] et AP[1] au moyen d'une boucle numérique à verrouillage de phase (DPLL).

8. Réseau selon la revendication 7, dans lequel AP[1] est en outre conçu pour :

recevoir un signal de clignotement d'étiquette ayant un troisième temps d'arrivée (ToA[tag:1::1]), en référence à la deuxième base de temps ; et
développer et transmettre un premier paquet de rapport d'étiquette dans lequel est intégré un quatrième temps d'arrivée (ToA[tag:1::0]), en référence à la première base de temps.

9. Réseau selon la revendication 7 ou 8, dans lequel AP[1] développe le ToA[tag:1::0] à partir du ToA[tag:1::1)] au moyen d'un normaliseur.

10. Réseau selon l'une quelconque des revendications 7 à 9, le réseau comprenant en outre un moteur de localisation central (CLE), et dans lequel :

AP[0] est en outre conçu pour transmettre le ToT au CLE ; et
AP[1] est en outre conçu pour transmettre le ToA[0:1::0] au CLE.

11. Réseau selon l'une quelconque des revendications 7 à 10, comprenant en outre un troisième point d'accès (AP[2]) ayant une troisième base de temps, et dans lequel :

AP[1] est en outre conçu de manière sélective pour retransmettre le CCP à AP[2] ; et
AP[2] est conçu pour recevoir le CCP à un premier temps d'arrivée (ToA[2]), en référence à la troisième base de temps, et, en réponse, pour développer un deuxième temps d'arrivée (ToA[2]), en référence à la première base de temps, en fonction du ToT, du ToA[2] et d'un premier temps de vol (ToF[0:2]) prédéterminé entre AP[0] et AP[2].

12. Réseau selon la revendication 11, dans lequel AP[2] est en outre conçu de manière sélective pour développer et transmettre un second paquet de rapport d'étiquette, dans lequel est intégrée une seconde référence de temps d'étiquette, en référence à la première base de temps.

13. Procédé d'utilisation dans un réseau de communication à bande ultralarge (UWB), le réseau comprenant :

une pluralité de points d'accès (AP) comprenant un premier point d'accès (AP[0]) ayant une première base de temps et un deuxième point d'accès (AP[1]) ayant une deuxième base de temps ; et
un moteur de localisation central (CLE) ;
le procédé consistant à :

stocker, par le CLE, un premier temps de vol (ToF[0:1]) entre AP[0] et AP[1] ;
développer et transmettre à AP[1], par AP[0], un premier paquet de synchronisation d'horloge (CCP[0]) à un premier temps de transmission (ToT[0]) sélectionné ;
recevoir, par AP[1], le CCP[0] et, en réponse, développer et transmettre à AP[0], par AP[1], un premier paquet de réponse d'AP (ARP[1]), un premier temps d'arrivée (ToA[0:1::1]), en référence à la deuxième base de temps, étant intégré dans l'ARP[1] ;
recevoir, par AP[0], l'ARP[1] et, en réponse, développer et transmettre au CLE, par AP[0], un premier paquet de réponse d'horloge (CRP[1]), le ToA[0:1::1] et le ToT étant intégrés dans le CRP[1] ; et
recevoir, par le CLE, le CRP[1] et, en réponse, calculer, par le CLE, un premier retard de propagation entre les première et deuxième bases de temps en fonction du ToT, du ToA[1] et du ToF[0:1] et développer un temps d'arrivée (ToA[0:1::0]), en référence à la première base de temps, à partir du ToA[0:1::1] au moyen d'une boucle numérique à verrouillage de phase (DPLL).

**14.** Procédé d'utilisation dans un réseau de communication à bande ultralarge (UWB) comprenant :

une pluralité de points d'accès (AP) comprenant un premier point d'accès (AP[0]) ayant une première base de temps et un deuxième point d'accès (AP[1]) ayant une deuxième base de temps ; et
un moteur de localisation central (CLE) ;
le procédé consistant à :

stocker, par le CLE, un premier temps de vol (ToF[0:1]) entre AP[0] et AP[1] ;
développer et transmettre à AP[1], par AP[0], un paquet de synchronisation d'horloge (CCP) à un temps de transmission (ToT) sélectionné ;
recevoir, par AP[1], le CCP et, en réponse, développer et transmettre au CLE, par AP[1], un premier paquet de réponse d'horloge (CRP[1]), un premier temps d'arrivée (ToA[0:1::1]), en référence à la deuxième base de temps, et le ToT étant intégrés dans le CRP[1] ; et
recevoir, par le CLE, le CRP[1] et, en réponse, calculer, par le CLE, un premier retard de propagation entre les première et deuxième bases de temps en fonction du ToT, du ToA[1] et du ToF[0:1] et développer un temps d'arrivée (ToA[0:1::0]), en référence à la première base de temps, à partir du ToA[0:1::1] au moyen d'une boucle numérique à verrouillage de phase (DPLL).

**15.** Procédé d'utilisation dans un réseau de communication à bande ultralarge (UWB) comprenant une pluralité de points d'accès (AP) comprenant un premier point d'accès (AP[0]) ayant une première base de temps et un deuxième point d'accès (AP[1]) ayant une deuxième base de temps, le procédé consistant à :

développer, par AP[0], un paquet de synchronisation d'horloge (CCP) en vue d'une transmission à un temps de transmission (ToT) sélectionné, le ToT étant intégré dans le CCP, et transmettre, par AP[0], le CCP à AP[1] au ToT sélectionné ; et
recevoir, par AP[1], le CCP à un premier temps d'arrivée (ToA[0:1::1]), en référence à la deuxième base de temps, et, en réponse, développer, par AP[1], un deuxième temps d'arrivée (ToA[0:1::0]), en référence à la première base de temps, en fonction du ToT, du ToA[0:1::1] et d'un premier temps de vol (ToF[0:1]) prédéterminé entre AP[0] et AP[1] au moyen d'une boucle numérique à verrouillage de phase (DPLL).

Fig. 1

Fig. 2

CLE

(A)

AP[0]

(B)

AP[x]

(C)

26 — Transmit CCP - - - ▶ Receive CCP — 30

28 — Record ToT — Calculate ToA[x] — 32

Build ARP[x] — 34

38 — Receive ARP[x] ◀ - · - Transmit ARP[x] — 36

40 — Build CRP[x]

44 — Receive CRP[x] ◀ - · - Transmit CRP[x] — 42

46 — Calculate Skew
[AP[0]::AP[x]]

(A)

(B)

(C)

Fig. 3

CLE · AP[0] · AP[x] · AP[y]

(A) · (B) · (C) · (C)

Transmit CCP[0] → Receive CCP[0]

48

Record ToT

Transmit CCP[x] ··▶ Receive CCP[x]

50

Calculate ToA[x]

Calculate ToA[y]

52

Build ARP[x]

Build ARP[y]

54

Receive ARP[x] ◀ Transmit ARP[x]

Receive ARP[y] ◀·· Transmit ARP[y]

56

58

Receive CRP[x] ◀· Transmit CRP[x]

Calculate Skew
[AP[0]::AP[x]]

Receive ARP[y] ◀·· Transmit ARP[y]

60

62

Build CRP[y]

64

70

Receive CRP[y] ◀· Transmit CRP[y]

68

72

Calculate Skew
[AP[0]::AP[y]]

(A) · (B) · (C) · (C)

Fig. 4

CLE
Ⓐ

AP[0]
Ⓑ

AP[x]
Ⓒ

74 — Calculate ToT

76 — Build CCP

78 — Transmit CCP ····▶ Receive CCP — 80

Calculate Skew
[AP[0]::AP[x]] — 82

Receive Tag$_i$ Blink
at ToA[tag$_i$:0::0] — 84

88 — Receive ToA[tag$_i$:0::0] ◀ Communicate
ToA[tag$_i$:0::0] — 86

Receive Tag$_i$ Blink
at ToA[tag$_i$:1::1] — 90

Normalize
ToA[tag$_i$:1::1]
to ToA[tag$_i$:1::0] — 92

96 — Receive ToA[tag$_i$:1::0] ◀·· Communicate
ToA[tag$_i$:1::0] — 94

98 — Calculate Tag$_i$ Location

Ⓐ Ⓑ Ⓒ

Fig. 5

100

Determine $t_d$, $I_t$, and $I_c$

Time

102

Issue Transmission Order $\cdots\cdots\cdots\cdots\cdots\cdots\cdots$ t[ITO]

118

114          116

104

Determine $t_s$

106

Embed $t_s$ in CCP

112

Issue Cancellation Order $\cdots\cdots$ t[ICO]

108

$t_d$

$I_c$

Start transmission of CCP $\cdots\cdots\cdots\cdots$ t[SoT]

110

$I_t$

Transmit RMARKER $\cdots\cdots\cdots\cdots\cdots$ t[ToT]

Fig. 6

120

$ToA[0:x::x]_{i-1}$

$ToA[0:x::0]_{i-1}$

gi

gp

$AP[x]_{skew}$

T

$ToA[0:x::0]_i$

T

x

$ToT[0:x::0]_i$

T

Fig. 7

122

$ToA[0:x::0]_i$    $AP[x]_{skew}$

$ToA[tag:x::x]_m$

x

$ToT[0:x::0]_m$

$ToA[tag:x::0]_{m'}$

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7787544 B
- US 11309222 A
- US 7636397 B
- US 12590124 A
- US 12885517 A
- US 1152056 W
- EP 1396730 A